# FASCICULE DE BREVET EUROPEEN

(11) **EP 3 655 507 B1**
(45) Date de publication et mention de la délivrance du brevet: **12.01.2022**
(21) Numéro de dépôt: 18729581.1
(22) Date de dépôt: 16.05.2018
(51) Int. Cl.: C10J 3/64

(54) **DISPOSITIF ET INSTALLATION DE CONVERSION DE MATIERES PREMIERES CARBONEES ET/OU HYDROCARBONEES SECHES EN GAZ DE SYNTHESE**
VORRICHTUNG UND ANLAGE ZUR UMWANDLUNG VON TROCKENEN KOHLENSTOFFHALTIGEN UND / ODER KOHLENWASSERSTOFFHALTIGEN ROHSTOFFEN IN SYNTHESEGAS
DEVICE AND FACILITY FOR CONVERTING DRY CARBON-CONTAINING AND/OR HYDROCARBON-CONTAINING RAW MATERIALS INTO SYNTHESIS GAS

(30) Priorité: 31.05.2017 FR 1754816
(43) Date de publication de la demande: 27.05.2020
(73) Titulaire: Guyomarc'h, Raymond, 82800 Negrepelisse (FR)
(72) Inventeur: GUYOMARC'H, Raymond, 82800 Negrepelisse (FR)
(74) Mandataire: IPAZ
(86) Numéro de dépôt international: PCT/EP2018/062709
(87) Numéro de publication internationale: WO 2018/219648

(56) Documents cités:
- DE-A1-102005 000 768
- FR-A1- 2 965 816
- US-A1- 2016 362 623

## Description

La présente invention concerne un dispositif de conversion en gaz de synthèse de matières premières carbonées et/ou hydrocarbonées sèches. Elle concerne également une installation comprenant un tel dispositif.

Le domaine de l'invention est le domaine de la génération d'un flux gazeux de synthèse à partir de matières premières carbonées et/ou hydrocarbonées sèches.

### Etat de la technique

Dans la suite de la demande et étant donné que l'essentiel des matières carbonées vierges ou manufacturées, neuves ou usées contiennent des éléments d'hydrogène dans leur composition chimique, pour éviter des lourdeurs rédactionnelles « MPCS » désigne « matières premières carbonées et/ou hydrocarbonées sèches ».

Il existe actuellement différents systèmes de conversion des MPCS en un gaz de synthèse, notamment conçus par le même inventeur. Ces systèmes comportent un volume de traitement dans lequel les MPCS sont chauffées pour initier une pyrolyse desdites MPCS.

Pour porter les MPCS à la température de pyrolyse, les systèmes actuels utilisent un flux gazeux caloporteur, généralement composé de CO₂, qui est fourni par un dispositif externe. Le flux gazeux caloporteur est chauffé avant d'être injecté dans le volume de traitement dans lequel se trouvent les MPCS. Il est très avantageux d'utiliser du CO₂ comme flux caloporteur car celui-ci comporte des atomes de carbone et d'oxygène, qui réagissent avec les molécules carbonées et/ou hydrocarbonées provenant des MPCS pour augmenter la quantité de CO et H₂ dans le gaz de synthèse.

Cependant, l'utilisation d'un flux gazeux caloporteur nécessite de générer ce flux gazeux caloporteur. Une première solution est de disposer d'une installation externe fournissant ce flux gazeux, ce qui n'est pas toujours le cas. Cela limite l'utilisation des systèmes actuels sur des sites qui ne disposent pas d'une telle installation. Une autre solution est de générer le flux gazeux caloporteur par oxycombustion d'une partie du gaz de synthèse obtenu, ce qui diminue le rendement global en quantité de gaz de synthèse obtenu. De plus, quelle que soit la solution, il est nécessaire de chauffer le flux gazeux caloporteur préalablement à son introduction dans le volume de traitement.

Il est, surtout, essentiel de réaliser un contact intime entre les MPCS et l'agent caloporteur pour obtenir une pyrolyse optimale; Pour cela la configuration du système de traitement doit permettre l'intégration parfaite de l'agent caloporteur au sein des MPCS sans omettre le moindre recoin qui peut remettre en question l'efficacité du traitement. Pour réussir cette gageure, dans un contexte où les conditions thermiques sont primordiales et interagissent sur les courants thermodynamiques à l'intérieur des systèmes, les moyens utilisés sont souvent pléthoriques. Par exemple des systèmes mécaniques externes d'injection sous pression des agents caloporteurs à haute température qui nécessitent des équipements spéciaux, ce qui augmente la complexité des systèmes actuels, et par conséquent leurs coûts.

Les documents FR 2 965 816 A1 et DE 10 2005 000768 A1 décrivent des réacteurs de gazéification comprenant une chambre de pyrolyse extérieure entourant une chambre de gazéification intérieure.

Un but de la présente invention est de remédier à ces inconvénients. Un autre but de l'invention est de proposer un dispositif de conversion de MPCS en gaz de synthèse autonome qui peut être utilisé même sur les sites qui ne disposent pas d'installation externe pour fournir un flux gazeux caloporteur, tout en présentant un meilleur rendement.

Encore un autre but de l'invention est de proposer un dispositif de conversion de MPCS en gaz de synthèse moins complexe et moins coûteux.

### Exposé de l'invention

L'invention permet d'atteindre au moins l'un de ces buts par un dispositif de conversion de matières premières carbonées et/ou hydrocarbonées sèches (MPCS) en un gaz de synthèse comprenant du, et en particulier constitué de, CO et H₂.

Le dispositif selon l'invention comprend :
- une chambre de pyrolyse de MPCS ouverte en partie haute et en partie basse, et prévue pour accueillir des MPCS,
- une ouverture d'introduction des MPCS dans ladite chambre de pyrolyse, en partie haute, et
- une ouverture d'extraction de gaz de synthèse de ladite chambre de pyrolyse, en partie basse ;
- une chambre centrale, disposée dans ladite chambre de pyrolyse, et comportant ;
- au moins une ouverture autorisant uniquement une communication gazeuse entre lesdites chambres centrale et de pyrolyse, et en particulier de la chambre centrale vers la chambre de pyrolyse ; et
- au moins une ouverture d'injection d'oxygène dans ladite chambre centrale pour y oxyder au moins une partie des gaz de pyrolyse passant de la chambre de pyrolyse à la chambre centrale;
caractérisé en ce que :
- l'au moins une ouverture d'injection d'oxygène (132) se trouve dans une chambre, dite de craquage, en partie basse de ladite chambre de centrale (120) ; et
- les ouvertures de communication gazeuse (128) se trouvent en partie haute et sur les côtés de ladite chambre centrale (120).

L'oxycombustion d'une partie des gaz de pyrolyse dans la chambre centrale permet d'apporter l'énergie thermique nécessaire pour chauffer les MPCS et provoquer leur pyrolyse, et les porter à une température de l'ordre de 1200°C en partie basse de la chambre de pyrolyse. L'énergie thermique pour la pyrolyse des MPCS est donc générée dans le dispositif selon l'invention, et en particulier à l'intérieur de la chambre centrale se trouvant, elle-même, au cœur de la chambre de pyrolyse. Autrement dit, la chambre centrale constitue le générateur thermique du dispositif selon l'invention. Par conséquent, le dispositif selon l'invention ne nécessite pas l'utilisation d'un flux gazeux caloporteur fourni par une installation externe, et préalablement chauffé, pour fonctionner dans le temps. Le dispositif selon l'invention est donc autonome de sorte qu'il peut être installé et utilisé sur tout site.

Le dispositif selon l'invention ne nécessite pas, non plus, d'utiliser une partie du gaz de synthèse pour générer un flux gazeux caloporteur, c'est ledit gaz de synthèse, recyclé et conditionné par un effet thermodynamique autogène naturel à l'intérieur même de la colonne centrale, qui interagit comme agent caloporteur, sans assistance mécanique d'aucune sorte. Ainsi, le dispositif selon l'invention présente un meilleur rendement comparé aux systèmes de l'état de la technique.

De plus, introduites dans la chambre de pyrolyse par l'ouverture d'introduction se trouvant en partie haute, les MPCS se déplacent, dans la chambre de pyrolyse, de haut en bas au fur et à mesure de leur traitement, sous l'effet de la gravité. Les gaz de pyrolyse se déplacent, dans la chambre de pyrolyse, également de haut en bas (en co-courant descendant) car ils sont extraits par l'ouverture d'extraction se trouvant en partie basse. Or, l'oxycombustion d'une fraction des gaz de pyrolyse se trouvant dans la chambre centrale augmente la température, ainsi que la pression, dans la colonne centrale, ce qui impose un courant ascendant, opposé au courant descendant de la chambre de pyrolyse. Le gaz ascendant est alors forcé à circuler vers la chambre de pyrolyse et s'introduire dans les MPCS se trouvant dans ladite chambre de pyrolyse.

Cette circulation forcée du gaz chaud provenant de la chambre centrale, et son injection au cœur des MPCS se trouvant dans la chambre de pyrolyse, permet la transmission intime de sa capacité thermique auxdites MPCS : la pyrolyse desdites MPCS s'accomplit de façon accélérée, voire instantanée.

Dans la présente demande, « matières premières carbonées et/ou hydrocarbonées sèches » ou « MPCS », désigne des matières premières carbonées et/ou hydrocarbonées dont le degré d'humidité relative (sur la masse brute) est inférieur à 8%, et de préférence anhydre.

Selon un exemple de réalisation, les MPCSpeuvent comprendre :
- de la biomasse végétale ou animale,
- des boues de traitement d'eau,
- des résidus de méthanisation,
- du charbon,
- de la tourbe,
- du lignite,
- des déchets organiques ou non de composition chimique carbonée et/ou hydrocarbonée,
- des pneumatiques usagés, ou
- une combinaison quelconque de ces matières carbonées.

Dans la présente demande, « gaz de synthèse » désigne un gaz composé essentiellement, voire exclusivement, de CO et de H₂. Selon que la matière première carbonée a dans sa composition l'élément hydrogène et/ou que ladite matière a une humidité relative, le « gaz de synthèse » (syngaz) sera composé d'une proportion de H₂ plus ou moins importante.

En particulier, la chambre centrale peut être disposée dans la chambre de pyrolyse de sorte qu'elle est entourée entièrement par la chambre de pyrolyse, et qu'en utilisation ladite chambre centrale est noyée dans les MPCS se trouvant dans ladite chambre de pyrolyse.

Bien entendu, le dispositif selon l'invention nécessite un apport thermique pour son démarrage.

Pour ce faire, il peut comprendre une source thermique, telle que par exemple un chalumeau, disposée dans la chambre centrale, en particulier en partie basse.

Au démarrage, la source thermique initie un courant ascendant naturel dans l'espace libre de la chambre centrale et génère une surpression définie par la configuration de ladite chambre centrale et sa situation immergée dans les matières premières carbonées. Lorsque la surpression dans ladite chambre centrale est supérieure aux forces et inerties desdites MPCS, la chaleur générée par la source thermique est éjectée vers la chambre de pyrolyse où elle est transmise aux MPCS. Les premiers gaz de pyrolyse, qui se forment alors à la périphérie de la chambre centrale, gravitent le long de la paroi externe de celle-ci, de haut en bas par le simple effet thermodynamique créé par le courant ascendant de ladite source thermique au sein de ladite chambre centrale. Lequel effet thermodynamique génère une dépression au bas de ladite chambre centrale qui aspire lesdits premiers gaz de pyrolyse. En se mélangeant à la source thermique de démarrage lesdits premiers gaz de pyrolyse sont portés à haute température, ils s'expansent et la surpression interne de ladite chambre centrale croit en accélérant le mouvement circulatoire, de bas en haut dans ladite colonne centrale et de haut en bas à l'extérieur de celle-ci dans ladite chambre de pyrolyse. Un effet thermosiphon naturel est généré qui ne s'arrêtera qu'avec l'arrêt du dispositif pyrolytique.

Une telle source thermique peut être utilisée uniquement pour apporter l'énergie thermique nécessaire à initier le fonctionnement du dispositif selon l'invention. Dès que les premiers gaz de pyrolyse se forment et passent dans la colonne centrale, l'utilisation de cette source thermique est arrêtée.

Bien entendu, l'effet thermosiphon naturel, décrit plus haut et démarré par la source thermique, est maintenu grâce à l'oxycombustion d'une partie des gaz de pyrolyse, et ce même après l'arrêt de la source thermique.

Selon l'invention, a chambre centrale comporte en sa partie basse une chambre, dite de craquage, comprenant l'au moins une ouverture d'injection d'oxygène.

Ainsi, l'oxycombustion de gaz de pyrolyse est réalisée dans la partie basse de la colonne centrale dans la chambre de craquage.

Cette chambre de craquage est en communication avec la chambre de pyrolyse en sa partie basse et en communication avec le reste de la chambre centrale en sa partie haute.

De plus, la chambre de craquage peut préférentiellement être étanche sur les côtés.

Suivant un exemple de réalisation non limitatif, la chambre centrale et la chambre de pyrolyse peuvent être concentriques.

De plus, la chambre centrale peut être disposée à égale distance des parois latérales de la chambre de pyrolyse.

En outre, la chambre centrale peut être disposée à une hauteur comprise entre 1/3 et 2/3 dans la chambre de pyrolyse, et plus particulièrement à mi-hauteur dans la chambre de pyrolyse.

Avantageusement, la chambre centrale peut être fermée en partie haute et sur les côtés, et ouverte sur la chambre de pyrolyse en partie basse.

En particulier, la partie supérieure de la chambre centrale peut se présenter sous la forme d'un cône, ou d'une pyramide, de sorte à diriger les MPCS déversées dans le dispositif, dans la chambre de pyrolyse se trouvant autour de la chambre centrale.

Les gaz de pyrolyse provenant de la chambre de pyrolyse, et qui seront oxydés dans la chambre centrale, et en particulier dans la chambre de craquage, entre dans ladite chambre centrale par la partie basse de la chambre centrale qui est ouvert sur la chambre de pyrolyse.

La chambre centrale comporte des ouvertures autorisant uniquement une communication gazeuse entre ladite chambre centrale et la chambre de pyrolyse, en partie haute de ladite chambre centrale et sur les côtés de ladite chambre centrale.

Ainsi, l'énergie thermique générée par l'oxycombustion d'une fraction de gaz de pyrolyse dans la chambre centrale peut passer de la chambre centrale à la chambre de pyrolyse, par les parois latérales et la paroi supérieure de la chambre centrale, et pénétrer dans les MPCS se trouvant dans ladite chambre de pyrolyse à peu près sur la totalité de la chambre de pyrolyse.

La circulation, de la chambre centrale à la chambre de pyrolyse, par l'effet thermosiphon naturel initié au démarrage de la pyrolyse, est accélérée par l'admission contrôlée d'oxygène dans ladite chambre de craquage. Ces effets thermodynamiques contrôlés déterminent la cinétique dudit effet thermosiphon naturel et la rapidité du processus de pyrolyse.

Autrement dit, une fraction de gaz de pyrolyse entre dans la chambre centrale en partie basse de ladite chambre centrale ouverte sur la chambre de pyrolyse et une partie relative, à la commande de chaleur/pression contrôlée par la température de consigne, de cette fraction de gaz de pyrolyse est oxydée par injection d'oxygène dans la chambre de craquage. La température générée par l'oxycombustion créée un mouvement ascendant dans la chambre centrale forçant le flux gazeux obtenu après oxycombustion à sortir de la chambre centrale par ses parois latérales et supérieure, et pénétrer dans les MPCS se trouvant dans la chambre de pyrolyse.

Ce mouvement thermodynamique à courants circulaires contraires verticaux (ascendants/descendants) sur toute la périphérie de la colonne centrale (composée de la chambre centrale et de la chambre de craquage) est connu comme "effet naturel thermosiphon".

Cependant la mise en œuvre d'un tel mouvement sans assistance mécanique, au sein même d'une zone remplie de matières solides fragmentées (qui forment une masse statique tant que lesdites matières ne sont pas gazéifiées), ne peut exister autrement que par un système en parfaite symbiose et synergie avec son environnement.

Seules, la disposition de la chambre centrale au cœur de la chambre de pyrolyse et la configuration de ladite chambre centrale permettent l'existence d'un tel mouvement:
- espace évidé, de ladite chambre centrale délimité par des parois verticale et supérieure au centre d'une zone remplie de matières solides fragmentées, dans lequel toute combustion génère automatiquement un courant ascendant, mais;
- espace évidé, de ladite chambre centrale délimité par des parois verticale et supérieure au centre d'une zone remplie de matières solides fragmentées, dans lequel toute combustion génère automatiquement une expansion de volume des gaz de combustion;
- laquelle expansion de volume des gaz de combustion, contenue dans ledit espace délimité par ses parois verticale et supérieure, génère automatiquement une expansion de la pression interne dudit espace;
- lesquelles parois verticale et supérieure, qui délimitent ledit espace évidé, sont percées d'orifices exutoires de ladite pression des gaz à haute température;
- lesquels exutoires permettent l'évacuation desdits gaz à haute température vers ladite chambre de pyrolyse, ce qui accélère le courant ascendant dans ladite chambre centrale et génère une dépression relative au bas de ladite chambre centrale à l'interconnexion avec ladite chambre de pyrolyse;
- lequel courant ascendant est en opposition avec le courant gravitaire descendant desdites matières solides fragmentées au sein même duquel est située ladite chambre centrale;
- lesquels gaz à haute température et sous pression interpénètrent lesdites matières solides fragmentées auxquelles ils transmettent leur capacité thermique.

Cette interaction est violente, elle soumet lesdites matières solides fragmentées à un choc thermique important. Lesdites MPCS sont à la température ambiante du site (>15 °C et jusqu'à plus de 30 °C) et les gaz sont à 1200°C;

L'échange thermique génère instantanément la pyrolyse des MPCS en même temps que la température supérieure à 1200°C desdits gaz initie la réaction rédox entre les carbones desdites MPCS et les molécules de CO₂ et de H₂O provenant de l'oxydation des molécules de CO et H₂ desdits gaz de pyrolyse ainsi que les CO₂ de complément qui sont injectés dans ladite chambre de pyrolyse;

La pyrolyse desdits MPCS réduit le volume des solides carbonés/hydrocarbonés gazéifiables de plus de 90% autour de ladite chambre centrale dans ladite chambre de pyrolyse. Cette réduction de volume est aussitôt comblée par un apport de MPCS en flux continu gravitaire descendant;

Ce faisant, lesdits gaz éjectés de ladite chambre centrale dans ladite chambre de pyrolyse et lesdits gaz de pyrolyse, générés lors de cette interaction, sont instantanément soumis audit courant gravitaire descendant desdites MPCS. Le courant descendant de cet ensemble gazeux est favorisé par l'aspiration mécanique d'extraction du gaz de synthèse au bas du dispositif de conversion;

En traversant les MPCS non gazéifiées et réduites à l'état de carbones pur (char ou biochar) qui sont accumulées gravitairement sur la grille d'évacuation des cendres, dans la partie inférieure de ladite chambre de pyrolyse, lesdits gaz de pyrolyse (générés lors de l'interaction décrite ciavant) finalisent la gazéification desdits carbones pur par réaction rédox avec les CO₂ résiduels dans ledit gaz de pyrolyse;

L'aspiration naturelle générée à la base de ladite chambre de pyrolyse par l'oxydation de gaz de synthèse dans ladite chambre centrale, plus particulièrement dans la chambre de craquage située au bas de ladite chambre centrale, profite de ce courant gazeux descendant;

Une fraction desdits gaz de pyrolyse (équivalente au volume de gaz évacué par lesdits orifices exutoires) est naturellement aspirée dans ladite chambre de craquage où elle est partiellement oxydée par l'apport d'O₂ provenant d'une injection d'oxygène;

Ceci alimente le courant gazeux ascendant dans ladite chambre centrale et régénère le cycle thermodynamique autothermique dans ladite chambre de pyrolyse.

Ainsi générés, ces courants gazeux verticaux et opposés (ascendants/descendant) sur toute la périphérie de la chambre centrale dans une zone totalement influencée par le courant gravitaire naturel des MPCS et l'aspiration mécanique d'extraction du gaz de synthèse à leur exutoire situé en partie basse du convertisseur, créent une centrale thermodynamique autogène grâce à laquelle toutes les particules des MPCS sont soumises aux gaz à haute température caloporteur et réactifs qui les gazéifie.

Optionnellement, le dispositif selon l'invention peut comprendre au moins une ouïe d'introduction d'un flux gazeux de CO₂, en particulier chaud, dans la chambre de pyrolyse, et en particulier au-dessus de la chambre centrale.

Une telle injection de CO₂ permet d'ajuster le dosage en élément d'oxygène et de carbone dans le gaz de synthèse produit par le dispositif selon l'invention.

Avantageusement, le dispositif selon l'invention peut comprendre au moins une double paroi séparant la chambre centrale de la chambre de pyrolyse, en particulier sur les côtés de la chambre centrale, prévue pour y faire circuler un flux gazeux de CO₂.

Ce flux gazeux de CO₂ peut être celui injecté en partie ou en totalité dans la chambre de pyrolyse, tel que décrit plus haut.

Avantageusement, du côté opposé à la chambre centrale, la chambre de pyrolyse est délimitée, voire entourée, par une double paroi, sur au moins une partie latérale de ladite chambre de pyrolyse, ladite double paroi étant en particulier prévue pour y faire circuler un flux gazeux de CO₂, qui peut ensuite être injecté dans la chambre de pyrolyse, tel que décrit plus haut.

Une telle double paroi permet d'une part de réduire les déperditions de chaleur vers l'environnement du dispositif selon l'invention, en favorisant l'échange thermique vers la chambre de pyrolyse.

Préférentiellement, la double paroi séparant les chambres de pyrolyse et centrale, et la double paroi délimitant la chambre de pyrolyse peuvent communiquer entre-elles, par une ou plusieurs doubles parois transversales.

Dans ce cas, ces doubles parois transversales traversent la chambre de pyrolyse.

Le dispositif selon l'invention peut comprendre une ouverture d'introduction de CO₂ dans au moins une double paroi.

Préférentiellement, le dispositif selon l'invention peut se présenter sous la forme d'un ensemble monobloc.

L'ensemble monobloc, et/ou la chambre de pyrolyse, et/ou la chambre centrale, peu(ven)t être cylindrique(s).

De plus, la chambre de pyrolyse et la chambre centrale peuvent préférentiellement être verticales.

Suivant un autre aspect de la présente invention, il est proposé une installation de production d'un gaz de synthèse comprenant du, et en particulier constitué de, CO et H₂, à partir de matières premières carbonées et/ou hydrocarbonées sèches (MPCS), ladite installation comprenant :
- un dispositif de conversion selon l'invention,
- un moyen d'introduction des MPCS dans ledit dispositif de conversion, et
- un moyen d'extraction de gaz de synthèse fourni par ledit dispositif de conversion.

Le moyen d'extraction peut comprendre l'un au moins des moyens suivants :
- au moins un moyen d'aspiration du gaz de synthèse relié, ou connecté, à l'ouverture d'extraction du dispositif de conversion ;
- au moins un échangeur thermique pour refroidir le gaz de synthèse fourni par ledit dispositif de conversion ;
- au moins un dispositif de filtrage du gaz de synthèse fourni par ledit dispositif de conversion.

Le moyen d'introduction des MPCS dans le dispositif de conversion peut être une vis sans fin, ou tout autre dispositif d'acheminement de MPCS.

### Description des figures et modes de réalisation

D'autres avantages et caractéristiques apparaîtront à l'examen de la description détaillée d'un mode de réalisation nullement limitatif, et des dessins annexés sur lesquels
- la FIGURE 1 est une représentation schématique en coupe verticale d'un exemple de réalisation non limitatif d'un dispositif de conversion selon l'invention ;
- la FIGURE 2 est une représentation schématique du dispositif de la FIGURE 1 selon une vue de dessus ;
- la FIGURE 3 est une représentation schématique du dispositif de la FIGURE 1 selon une coupe horizontale ; et
- la FIGURE 4 est une représentation schématique d'un exemple de réalisation non limitatif d'une installation selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures les éléments communs à plusieurs figures conservent la même référence.

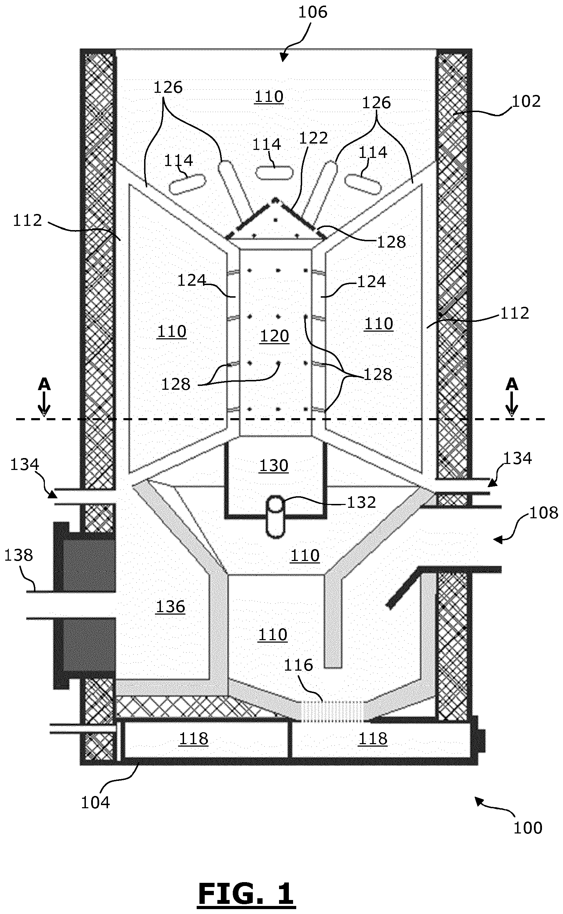

Les FIGURES 1-3 sont des représentations schématiques d'un exemple de réalisation non limitatif d'un dispositif selon l'invention pour la conversation de MPCS en gaz de synthèse.

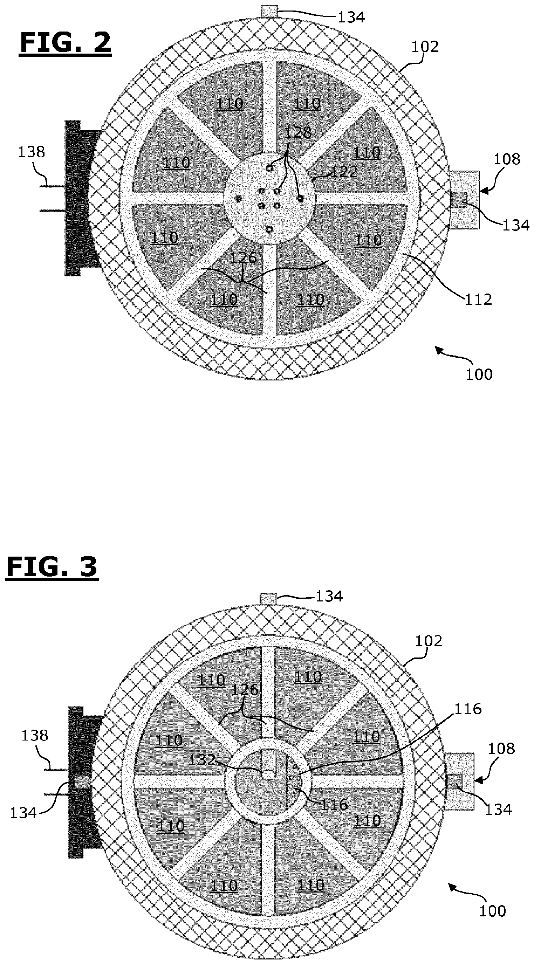

La FIGURE 1 est une vue en coupe verticale du dispositif, la FIGURE 2 est une vue de dessus et la FIGURE 3 est une vue en coupe horizontale selon la ligne AA de la FIGURE 1.

Le dispositif de conversion 100 représenté sur les FIGURES 1-3 se présente sous la forme d'un ensemble monobloc cylindrique vertical formé d'une paroi latérale 102 et d'une paroi inférieure 104.

Le dispositif 100 comprend une ouverture 106 d'introduction des MPCS au niveau de son extrémité supérieure et une ouverture 108 d'extraction de gaz de synthèse en sa partie basse.

Le dispositif 100 comprend en outre une chambre 110 de pyrolyse des MPCS s'étendant sensiblement sur toute la hauteur du dispositif de conversion 100.

Dans sa partie haute, la chambre de pyrolyse 110 est ouverte sur la totalité de la largeur de l'ouverture d'introduction 106, pour y déverser les MPCS à traiter.

Dans la chambre de pyrolyse 110, les MPCS sont en mouvement descendant du fait de la gravité.

Les gaz de synthèse générés dans la chambre de pyrolyse 110 sont également en mouvement descendant car ils sont évacués, par exemple par aspiration, par l'ouverture d'extraction 108 se trouvant en partie basse du dispositif 100.

Dans la partie centrale du dispositif 100, le long de l'axe vertical, la chambre de pyrolyse 110 est séparée de la paroi latérale extérieure 102 du dispositif 100 par une double paroi 112. Cette double paroi est prévue pour y faire circuler un flux gazeux de CO₂ en vue de le chauffer.

De plus, la chambre de pyrolyse 110 comprend, en partie haute, des ouïes 114 d'injection de CO₂ chaud, formées dans la double paroi 112, de sorte que le flux gazeux de CO₂ chauffé soit introduit dans la chambre de pyrolyse en partie haute.

En sa partie basse, la largeur de la chambre de pyrolyse 110 diminue de sorte que la partie basse de ladite chambre de pyrolyse 110 forme un entonnoir. Cet entonnoir est ouvert du côté de l'ouverture d'extraction 108, cette dernière étant placée au-dessus du niveau bas de l'entonnoir. Ainsi, les résidus solides non gazéifiables libérés lors de la pyrolyse des MPCS ne peuvent pas sortir par l'ouverture d'extraction 108 du gaz de synthèse.

Sous l'entonnoir, c'est-à-dire sous la chambre de pyrolyse 110, sont prévus une grille 116 et un cendrier 118 d'évacuation des résidus solides non gazéifiables.

Le dispositif 100 comprend en outre une chambre centrale 120, en forme de colonne verticale. La chambre centrale 120 est disposée dans la chambre de pyrolyse 110 et est complètement entourée par la chambre de pyrolyse au-dessus, en dessous et sur les côtés. Autrement dit, la chambre centrale 120 est entièrement noyée ou plongée dans la chambre de pyrolyse 110.

La chambre centrale 120 est séparée de la chambre de pyrolyse 110.

En partie haute, la chambre centrale 120 comporte une paroi simple 122 formant sa coiffe et en forme de cône ou de pyramide pour diriger les MPCS dans la chambre de pyrolyse se trouvant tout autour de la chambre centrale 120.

Sur les côtés, la chambre centrale 120 est séparée de la chambre de pyrolyse par une double paroi 124 prévue pour y faire circuler un flux gazeux de CO₂ en vue de le chauffer. Cette double paroi 124 est en communication avec la double paroi 112 par des liaisons transversales tubulaires 126 qui les relient entre elles. De la partie supérieure de la double paroi 124 de la chambre centrale 120 à la partie supérieure de la double paroi 112 de la chambre de pyrolyse 110 et de la base de la double paroi 112 de la chambre de pyrolyse 110 à la base de la double paroi 124 de la chambre centrale 120. Cette configuration permet la circulation naturelle du CO₂ dans cet ensemble par "effet thermosiphon" généré et contrôlé par la chaleur élevée (élévation de la température à plus de 1200°C dans des conditions explicitées plus loin dans le texte) générée dans la chambre de craquage et l'échange thermique, par conduction et rayonnement, par la paroi interne de la double paroi 124 de la chambre centrale 120 qui génère un courant ascendant au CO₂, contenu dans cette double paroi, et qui s'expanse en chauffant. Lequel dit CO₂, circulant dans lesdites doubles parois 124 et 112, refroidit en échangeant thermiquement, par conduction et rayonnement, avec les MPCS et se densifie en imprimant un courant descendant dans la double paroi 112 de la chambre de pyrolyse 110. Ces courants inversés mettent en mouvement une thermodynamique naturelle circulaire dudit CO₂ par "effet thermosiphon" généré et contrôlé par l'oxycombustion, de la fraction de gaz de pyrolyse, générée dans la chambre de craquage.

Les parois 122 et 124 comportent des ouvertures 128 de communication gazeuse, autorisant uniquement le passage de gaz entre la chambre centrale 120 et la chambre de pyrolyse 110. Ainsi, le gaz à haute température (plus de 1200°C) produit dans la chambre centrale 120 peut passer dans la chambre de pyrolyse 110 par exemple au travers de la double paroi latérale 124 ou de la coiffe 122.

La chambre centrale 120 comporte, en sa partie basse, une chambre 130, dite de craquage, formant la partie basse de la chambre centrale 120. Cette chambre 130 est ouverte, en partie haute, sur le reste de la chambre centrale 120, et en partie basse, sur la chambre de pyrolyse 110. La paroi latérale de la chambre de craquage est étanche.

Cette chambre de craquage 130 comporte en son extrémité basse un injecteur 132 d'oxygène dans la chambre de craquage 130 de sorte à y oxyder une partie des gaz de pyrolyse qui s'y trouvent, et qui proviennent de la chambre de pyrolyse 110 par la périphérie de la base de la chambre de craquage 130, comme cela est expliqué ci-dessous.

L'oxycombustion des gaz de pyrolyse dans la chambre de craquage 130 est très exothermique. Cette exothermie génère d'une part de l'énergie thermique qui alimente le besoin énergétique du dispositif 100 pour la conversion en gaz de synthèse des MPCS. D'autre part, l'oxycombustion exothermique dans la chambre de craquage 130 génère une forte expansion du gaz, porté à plus de 1200°C, qui est contenue par les parois des chambres de craquage 130 et de la chambre centrale 120. Cette expansion crée une surpression exponentielle dans la chambre centrale 120 dont l'excès est évacué en jets puissants de gaz chauds par les exutoires 128. Cette surpression et ces courants d'évacuation engendrent un courant ascendant des flux gazeux dans la chambre de pyrolyse 120, opposé au courant descendant de la chambre de pyrolyse 130. Le courant ascendant combiné à la surpression permet au flux gazeux à une température supérieure à 1200°C de pénétrer dans la totalité des MPCS présentes dans la chambre de pyrolyse 110 au travers des parois 124 et 122. Ces exutoires favorisent et accélèrent le courant thermodynamique ascendant, ce qui crée une dépression relative à la périphérie de la base de la chambre de craquage 130, à la conjonction avec la chambre de pyrolyse 110. Ceci génère une aspiration dans cette zone de passage des gaz de pyrolyse (CO et H₂), qui sont en mouvement descendant aspirés par le système d'extraction décrit plus loin. L'équivalent relatif aux gaz expulsés par les exutoires 128 est aspiré dans ladite chambre de craquage 130, une fraction de ces gaz de pyrolyse est oxydée par l'oxygène introduit par l'injecteur 132. Ladite injection d'oxygène est contrôlée drastiquement par le contrôle de la température à l'intérieur de la chambre centrale 120 (par une sonde connue non décrite), cette oxydation d'une fraction des gaz de pyrolyse aspirés dans la chambre de craquage 130 élèvent la température de l'intégralité desdits gaz de pyrolyse (aspirés à la conjonction de la périphérie de la base la chambre de craquage 130 avec la chambre de pyrolyse 110) à 1200°C ou plus, ce qui participe au courant thermodynamique ascendant et à la surpression et à l'expulsion des gaz chauds vers la chambre de pyrolyse 110. Ce mouvement thermodynamique à courants circulaires contraires verticaux (ascendants/descendants) sur toute la périphérie de la colonne centrale (composée de la chambre centrale 120 et de la chambre de craquage 130) est connu comme "effet naturel thermosiphon". L'ensemble gazeux à plus de 1200°C, qui est propulsé au cœur des MPCS dans l'intégralité du volume de la chambre de pyrolyse 110, est composé de l'essentiel des CO et H₂ desdits gaz de pyrolyse (aspirés à la conjonction de la périphérie de la base la chambre de craquage 130 avec la chambre de pyrolyse 110) et de molécules de CO₂ et de H₂O provenant de l'oxycombustion de la fraction desdits gaz de pyrolyse (aspirés dans la chambre de craquage 130) dont l'oxydation exothermique, par l'oxygène provenant de l'injecteur 132, a permis de porter cet ensemble gazeux à 1200°C, ou plus en fonction de la cinétique de pyrolyse recherchée. Ce cycle thermodynamique à effet thermosiphon, autogène et permanent, recycle en continu une part de gaz de pyrolyse qui devient l'agent principal caloporteur qui permet d'apporter l'énergie thermique nécessaire à la pyrolyse de la totalité des MPCS présentes dans la chambre de pyrolyse 110 avant d'être extrait comme gaz de synthèse par le conduit 108. La surpression (contrôlée par la température du milieu de la chambre centrale 110) est définie supérieure à l'inertie des MPCS présentes dans l'entonnoir de la chambre de pyrolyse 110, sous la chambre de craquage 130) ce qui a pour effet de permettre une évacuation partielle des gaz de pyrolyse surchauffés provenant de ladite chambre de craquage. Cette fraction des gaz de pyrolyse est surchauffées à plus de 1200°C, elle interagit directement avec les gaz de pyrolyse qui sont aspirés (en flux dynamique descendant par le système d'extraction du syngaz) pour réagir avec les carbones résiduels des MPCS (qui sont à plus de 1000°C et n'ont pas été pyrolysés à ce stade de la chambre de pyrolyse 110) et apporter l'énergie compensatrice de la réaction d'oxydoréduction qui s'opère entre ces carbones "réducteurs" et les molécules "oxydantes" de CO₂ et de H₂O véhiculées par le gaz de pyrolyse; Réaction thermochimique "endothermique" qui gazéifie lesdits carbones résiduels des MPCS et reconvertit lesdits CO₂ et H₂O en énergie ressource CO et H₂, selon les formules décrites par Boudouard : C + CO₂ ⇄ 2CO et C + H₂O ⇄ CO + H₂. La pyrolyse est ainsi complète sans consommation de gaz de pyrolyse qui grèverait le rendement du transfert de l'énergie potentielle des MPCS au gaz de synthèse "syngaz". Au contraire, la réaction d'oxydoréduction qui s'opère entre les carbones "réducteurs" et les molécules "oxydantes" de CO₂ apportent au syngaz produit des molécules de CO (énergie ressource provenant de la réduction du CO₂) qui compense l'endothermie de la réaction finale.

La double paroi 124 de la chambre centrale 120 est portée, sur sa face intérieure, à la température du flux gazeux ascendant (>1200°C). Cette paroi intérieure, de la double paroi 124 de la chambre centrale 120, est au contact du CO₂ qui circule dans ladite la double paroi 124 auquel elle transmet la chaleur de la chambre centrale 120. Le CO₂ qui circule dans ladite la double paroi 124, est aussi chauffé par les tubes exutoires 128 qui traversent ladite double paroi 124. La paroi extérieure, de la double paroi 124 de la chambre centrale 120, est chauffée par le CO₂ qui circule dans ladite la double paroi 124 et transmet la chaleur véhiculée par ledit CO₂ circulant aux MPCS contenues dans la chambre de pyrolyse 110. Ce même CO₂ qui circule, à une température voisine de 1200°C, dans les liaisons tubulaires supérieures 126 transmet sa capacité thermique aux MPCS qui alimentent la chambre de pyrolyse 110. Ce même CO₂ circule, avec une température décroissante jusqu'à 1000°C, en courant descendant dans la double paroi 112 de la chambre de pyrolyse 110 avec laquelle il échange sa capacité thermique aux MPCS qu'elle contient. Ce même CO₂ revient, dans un cycle circulaire à effet thermosiphon, dans la double paroi 124 de la chambre centrale 120 (par les liaisons tubulaires inférieures 126) où il est réchauffé par le flux gazeux dans ladite chambre centrale 120, lequel flux gazeux circule avec son propre cycle thermodynamique circulaire à effet thermosiphon généré par l'oxydation partielle de gaz de pyrolyse générés par ledit flux gazeux. Ces deux circonvolutions, à axe vertical, ont donc la même source d'énergie autogène et sont interdépendantes, leurs autothermies synergiques contribuent à un échange thermique homogène avec les MPCS dans la chambre de pyrolyse 110. Les effets conjugués, synergiques et permanents des circonvolutions thermodynamiques verticales créent toutes les conditions symbiotiques, indispensables à une pyrolyse optimale : interpénétration totale et intime des MPCS par du gaz caloporteur à plus de 1200°C, grâce aux jets surpressés des gaz de pyrolyse surchauffés provenant de la chambre centrale; Échange thermodynamique instantané entre le gaz caloporteur à plus de 1200°C et les MPCS, par convection, conduction, rayonnement et par un effet osmotique dynamique engendré par la conjugaison de l'interpénétration sous pression (effet thermodynamique naturel autogène) de l'agent caloporteur composé du gaz de pyrolyse (CO + H₂) et des molécules de CO₂ et de H₂O (provenant de l'oxycombustion de la fraction desdits gaz de pyrolyse aspirés dans la chambre de craquage 130), ces molécules (identiques à celles composant les MPCS et provenant des mêmes MPCS déjà pyrolysés) surchauffées à plus de 1200°C sont en osmose avec lesdits MPCS; Échange thermodynamique aussi par les parois de la chambre de pyrolyse par l'action conjuguée des échanges thermiques statiques (conduction et rayonnement des parois au contact des MPCS de l'ensemble doubles parois dans lesquelles circule le CO₂ entre 1200 et 1000°C) et les courants dynamiques et thermodynamiques descendants dans la chambre de pyrolyse 110.

En outre, l'injecteur 132 peut être utilisé comme chalumeau pour apporter l'énergie thermique nécessaire au démarrage de la pyrolyse dans le dispositif 100. Alternativement un chalumeau indépendant de l'injecteur 132 peut être prévu.

Le dispositif 100 comporte en outre des orifices 134 de raccordement de l'ensemble doubles parois 112, 124 et leurs liaisons tubulaires 126 à un dispositif de circulation externe assurant la circulation du CO₂ dans ces doubles parois.

Le dispositif 100 comporte en outre une chambre 136 de production d'un flux gazeux de CO₂ en communication avec l'ensemble doubles parois 112, 124 et leurs liaisons tubulaires 126. Cette chambre 136 peut comprendre un conduit 138 d'introduction d'une partie du gaz de synthèse, ou de tout autre gaz, pour y générer le flux gazeux de CO₂, de manière autonome.

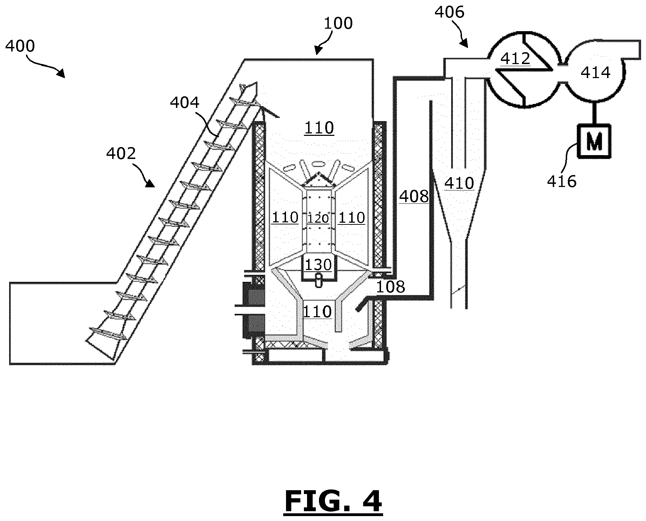

La FIGURE 4 est une représentation schématique d'un exemple de réalisation non limitatif d'une installation selon l'invention.

L'installation 400, représentée sur la FIGURE 4, met en œuvre un dispositif de conversion de MPCS, tel que par exemple le dispositif 100 des FIGURES 1-3.

L'installation 400 comprend en outre un dispositif 402 d'alimentation en MPCS du dispositif de conversion 100. Ce dispositif d'alimentation 402 est relié à l'ouverture d'introduction 106 du dispositif de conversion 100. Il comprend, de manière nullement limitative, une vis sans fin 404, agencée dans un conduit étanche, et transportant les MPCS jusqu'à ce qu'elles soient déversées dans la chambre de pyrolyse 110.

L'installation 400 comprend en outre un dispositif 404 d'extraction et de traitement du gaz de synthèse relié à l'ouverture d'extraction 108. Le dispositif d'extraction et de traitement 406 comprend, dans cet ordre :
- un premier échangeur de chaleur 408, relié à l'ouverture d'extraction 108 pour diminuer la température du gaz de synthèse ;
- un cyclone 410, en aval du premier échangeur de chaleur 408, pour éliminer d'éventuelles particules solides se trouvant dans le gaz ;
- un deuxième échangeur de chaleur 412, en aval du cyclone 410, pour diminuer la température du gaz de synthèse à une température inférieure à 50°C ; et
- un extracteur mécanique 414, comprenant un moteur 416, pour aspirer le gaz de synthèse.

Nous allons maintenant décrire un exemple de fonctionnement non limitatif du dispositif de conversation 100, en référence aux FIGURES 1-3. Bien que décrit en référence au dispositif 100, ce fonctionnement peut être appliqué à tout dispositif selon l'invention.

Les MPCS sont introduites dans la chambre de pyrolyse 110 jusqu'à ce que ladite chambre de pyrolyse 110 soit remplie de MPCS et que la chambre centrale 120 soit entièrement noyée dans les MPCS. Dans cette configuration, les MPCS occupent toute la chambre de pyrolyse de la grille 116 jusqu'à un niveau se trouvant au-dessus des ouïes 114 d'injection de CO₂.

Lors d'une phase de démarrage, de l'énergie thermique est apportée dans la chambre centrale 120, par exemple grâce à un chalumeau ou grâce à l'injecteur d'oxygène 132. L'apport d'énergie thermique est réalisé jusqu'au démarrage de la pyrolyse dans la chambre de pyrolyse 110, c'est-à-dire jusqu'à ce que les MPCS soient portées à une température supérieure ou égale à 200°C. Dès que les MPCS commencent à se décomposer en gaz de pyrolyse, l'apport thermique est arrêté, et le dispositif peut fonctionner de manière autonome.

Sous l'action de l'extracteur mécanique 414 les gaz de pyrolyse sont aspirés dans un mouvement descendant dans la chambre de pyrolyse 110 au travers de l'ouverture 108. Une partie des gaz de pyrolyse générés dans la chambre de pyrolyse 110 pénètre dans la chambre de craquage 130, à la conjonction de la périphérie de la base de ladite chambre de craquage 130 avec la chambre de pyrolyse 110. Ces gaz de pyrolyse sont à une température égale ou supérieure à 1000°C.

L'injection d'oxygène dans la chambre de craquage 130 provoque une oxycombustion d'une fraction des gaz de pyrolyse aspirés dans la chambre de craquage 130. Cette oxycombustion est éminemment exothermique et génère une température supérieure à 1200°C, ce qui a plusieurs conséquences. Premièrement, les parois de la chambre de craquage 130 ainsi que les parois 128 et 122 sont chauffées et rayonnent thermiquement dans la chambre de pyrolyse 110 : cela maintient la température de pyrolyse dans toute la chambre de pyrolyse 110. Deuxièmement, l'augmentation de la température créé une surpression dans la chambre de craquage 130, qui force un mouvement de gaz ascendant dans la chambre centrale 120. Ce mouvement ascendant et la surpression générée forcent les gaz se trouvant dans la chambre centrale 120 à sortir de la chambre centrale 120 par les ouvertures 128 et pénétrer dans les MPCS présentes dans la chambre de pyrolyse : cette pénétration du gaz très chaud à plus de 1200°C permet :
- d'une part de chauffer toutes les MPCS présentes dans la chambre de pyrolyse, et
- d'autre part d'amener les composés CO₂ et H₂O produits par l'oxycombustion au contact des MPCS : ces composés réagissent avec les MPCS comme oxydants pour produire des CO et H₂, ce qui permet de parfaire les réactions chimiques et d'augmenter le rendement de la pyrolyse des MPCS.

Si nécessaire, un flux gazeux de CO₂ à 1200°C est injecté en partie haute dans la chambre pyrolyse par les ouïes 114.

Au fur et à mesure de leur pyrolyse, les MPCS suivent un mouvement descendant dans la chambre de pyrolyse. De nouvelles MPCS sont ajoutées en partie haute de la chambre de pyrolyse 110.

La température des MPCS augmente progressivement dans le sens descendant dans la chambre de pyrolyse grâce à l'énergie thermique apportée par la chambre centrale 120 qui constitue le générateur thermique du dispositif 100 selon l'invention. En bas de la chambre de pyrolyse 110, les MPCS et le gaz de synthèse obtenus sont à une température inférieure ou égale à 1200°C.

Le gaz de synthèse obtenu est formé principalement, voire exclusivement, de CO et H₂.

Bien entendu, l'invention n'est pas limitée aux exemples détaillés cidessus.

## Revendications

1. Dispositif (100) de conversion de matières premières carbonées sèches (MPCS) en un gaz de synthèse comprenant du, et en particulier constitué de, CO et H₂, ledit dispositif (100) comprenant :
- une chambre (110) de pyrolyse de MPCS ouverte en partie haute et en partie basse, et prévue pour accueillir des MPCS,
- une ouverture (106) d'introduction des MPCS dans ladite chambre de pyrolyse (110), en partie haute, et
- une ouverture (108) d'extraction de gaz de synthèse de ladite chambre de pyrolyse (110), en partie basse ;
- une chambre centrale (120), disposée dans ladite chambre de pyrolyse (110), et comportant :
▪ au moins une ouverture (128) autorisant uniquement une communication gazeuse entre lesdites chambres centrale (120) et de pyrolyse (110), et
▪ au moins une ouverture (132) d'injection d'oxygène dans ladite chambre centrale (120) pour y oxyder au moins une partie des gaz de pyrolyse passant de la chambre de pyrolyse (110) à la chambre centrale (120) ;
**caractérisé en ce que** :
- l'au moins une ouverture d'injection d'oxygène (132) se trouve dans une chambre, dite de craquage, en partie basse de ladite chambre de centrale (120) ; et
- les ouvertures de communication gazeuse (128) se trouvent en partie haute et sur les côtés de ladite chambre centrale (120).

2. Dispositif (100) selon la revendication précédente, **caractérisé en ce qu'**il comprend, dans la chambre centrale (120), une source de chaleur fournissant la chaleur nécessaire au démarrage dudit dispositif (100).

3. Dispositif (100) selon l'une quelconque des revendications précédentes, **caractérisé en ce que** la chambre centrale (120) et la chambre de pyrolyse (110) sont concentriques.

4. Dispositif (100) selon l'une quelconque des revendications précédentes, **caractérisé en ce qu'**il comprend au moins une ouïe (114) d'introduction d'un flux gazeux de CO₂, en particulier chaud, dans la chambre de pyrolyse (110), et en particulier au-dessus de la chambre centrale (120).

5. Dispositif (100) selon l'une quelconque des revendications précédentes, **caractérisé en ce qu'**il comprend au moins une double paroi (124) séparant la chambre centrale (120) de la chambre de pyrolyse (110), en particulier sur les côtés de la chambre centrale (120), prévue pour y faire circuler un flux gazeux de CO₂.

6. Dispositif (100) selon l'une quelconque des revendications précédentes, **caractérisé en ce que**, du côté opposé à la chambre centrale (120), la chambre de pyrolyse (110) est délimitée par une double paroi (112) sur au moins une partie latérale de ladite chambre de pyrolyse (110).

7. Dispositif (100) selon les revendications 5 et 6, **caractérisé en ce que** la double paroi (124) séparant les chambres de pyrolyse (110) et centrale (120), et la double paroi (112) délimitant la chambre de pyrolyse (110) communiquent entre-elles, par une ou plusieurs doubles parois transversales (126).

8. Dispositif (100) selon l'une quelconque des revendications 5 à 7, **caractérisé en ce qu'**il comprend une ouverture (134) d'introduction de CO₂ dans au moins une double paroi (112, 124, 126).

9. Dispositif (100) selon l'une quelconque des revendications précédentes, **caractérisé en ce qu'**il se présente sous la forme d'un ensemble monobloc.

10. Installation (400) de production d'un gaz de synthèse comprenant du, et en particulier constitué de, CO et H₂, à partir de matières premières carbonées sèches (MPCS), ladite installation (400) comprenant :
- un dispositif de conversion (100) selon l'une quelconque des revendications précédentes,
- un moyen (402) d'introduction des MPCS dans ledit dispositif de conversion (100), et
- un moyen (406) d'extraction de gaz de synthèse fourni par ledit dispositif de conversion (100).

11. Installation (400) selon la revendication précédente, **caractérisée en ce que** le moyen d'extraction (406) comprend l'un au moins des moyens suivants :
- au moins un moyen (414) d'aspiration du gaz de synthèse relié, ou connecté, à l'ouverture d'extraction (108) du dispositif de conversion (100) ;
- au moins un échangeur thermique (408,412) pour refroidir le gaz de synthèse fourni par ledit dispositif de conversion (100) ;
- au moins un dispositif (410) de filtrage du gaz de synthèse fourni par ledit dispositif de conversion (100).

## Patentansprüche

1. Vorrichtung (100) zur Umwandlung von trockenen kohlenstoffhaltigen Rohstoffen (MPCS) in ein Synthesegas, das CO und H₂ umfasst und insbesondere daraus besteht, wobei die Vorrichtung (100) Folgendes umfasst:
- eine Kammer (110) zur Pyrolyse von MPCS, die im oberen Teil und im unteren Teil offen ist und zur Aufnahme der MPCS vorgesehen ist,
- eine Öffnung (106) zum Einführen der MPCS in die Pyrolysekammer (110) im oberen Teil und
- eine Öffnung (108) zum Extrahieren von Synthesegas aus der Pyrolysekammer (110) im unteren Teil;
- eine zentrale Kammer (120), die in der Pyrolysekammer (110) angeordnet ist und Folgendes umfasst:
▪ mindestens eine Öffnung (128), die nur eine Gasverbindung zwischen der zentralen Kammer (120) und der Pyrolysekammer (110) zulässt, und
▪ mindestens eine Öffnung (132) zum Einblasen von Sauerstoff in die zentrale Kammer (120), damit dort mindestens ein Teil der Pyrolysegase zu oxidiert, die von der Pyrolysekammer (110) in die zentrale Kammer (120) strömen;
**dadurch gekennzeichnet, dass**:
- die mindestens eine Sauerstoffeinblasöffnung (132) sich in einer Kammer, der so genannten Crackkammer, im unteren Teil der zentralen Kammer (120) befindet; und
- die Gasverbindungsöffnungen (128) sich im oberen Teil und an den Seiten der zentralen Kammer (120) befinden.

2. Vorrichtung (100) nach vorstehendem Anspruch, **dadurch gekennzeichnet, dass** sie in der zentralen Kammer (120) eine Wärmequelle umfasst, die die zum Starten der Vorrichtung (100) erforderliche Wärme bereitstellt.

3. Vorrichtung (100) nach einem der vorstehenden Ansprüche, **dadurch gekennzeichnet, dass** die zentrale Kammer (120) und die Pyrolysekammer (110) konzentrisch sind.

4. Vorrichtung (100) nach einem der vorstehenden Ansprüche, **dadurch gekennzeichnet, dass** sie mindestens einen Lufteinlass (114) zum Einführen eines insbesondere heißen CO₂-Gasstroms in die Pyrolysekammer (110) und insbesondere über der zentralen Kammer (120) umfasst.

5. Vorrichtung (100) nach einem der vorstehenden Ansprüche, **dadurch gekennzeichnet, dass** sie mindestens eine Doppelwand (124) umfasst, die die zentrale Kammer (120) von der Pyrolysekammer (110) trennt, insbesondere an den Seiten der zentralen Kammer (120), die dafür vorgesehen ist, darin einen CO₂-Gasstrom zirkulieren zu lassen.

6. Vorrichtung (100) nach einem der vorstehenden Ansprüche, **dadurch gekennzeichnet, dass** auf der der zentralen Kammer (120) gegenüberliegenden Seite die Pyrolysekammer (110) durch eine Doppelwand (112) an mindestens einem Seitenteil der Pyrolysekammer (110) begrenzt ist.

7. Vorrichtung (100) nach den Ansprüchen 5 und 6, **dadurch gekennzeichnet, dass** die Doppelwand (124), die die Pyrolysekammer (110) und die zentrale Kammer (120) trennt, und die Doppelwand (112), die die Pyrolysekammer (110) begrenzt, durch eine oder mehrere querverlaufende Doppelwände (126) miteinander in Verbindung stehen.

8. Vorrichtung (100) nach einem der Ansprüche 5 bis 7, **dadurch gekennzeichnet, dass** sie eine Öffnung (134) zum Einführen von CO₂ in mindestens eine Doppelwand (112, 124, 126) umfasst.

9. Vorrichtung (100) nach einem der vorstehenden Ansprüche, **dadurch gekennzeichnet, dass** sie in Form einer einteiligen Baugruppe vorliegt.

10. Anlage (400) zur Herstellung eines Synthesegases, das CO und H₂ umfasst und insbesondere daraus besteht, aus trockenen kohlenstoffhaltigen Rohstoffen (MPCS), wobei die Anlage (400) Folgendes umfasst:
- eine Umwandlungsvorrichtung (100) nach einem der vorstehenden Ansprüche,
- ein Mittel (402) zum Einführen der MPCS in die Umwandlungsvorrichtung (100) und
- ein Mittel (406) zum Extrahieren von von der Umwandlungsvorrichtung (100) bereitgestelltem Synthesegas.

11. Anlage (400) nach vorstehendem Anspruch, **dadurch gekennzeichnet, dass** das Mittel zum Extrahieren (406) mindestens eins der folgenden Mittel umfasst:
- mindestens ein Mittel (414) zum Absaugen des Synthesegases, das mit der Extraktionsöffnung (108) der Umwandlungsvorrichtung (100) verbunden oder daran angeschlossen ist;
- mindestens einen Wärmetauscher (408, 412) zum Kühlen des von der Umwandlungsvorrichtung (100) bereitgestellten Synthesegases;
- mindestens eine Vorrichtung (410) zum Filtern des von der Umwandlungsvorrichtung (100) bereitgestellten Synthesegases.

## Claims

1. A device (100) for converting dry carbonaceous raw materials (DCRM) into a synthesis gas comprising, and in particular consisting of, CO and H₂, said device (100) comprising:
- a DCRM pyrolysis chamber (110) which is open at the top and bottom, and intended to receive DCRM,
- an opening (106) for inserting DCRM into said pyrolysis chamber (110), at the top, and
- an opening (108) for extracting synthesis gas from said pyrolysis chamber (110), at the bottom;
- a central chamber (120), arranged in said pyrolysis chamber (110), and comprising:
▪ at least one opening (128) allowing only gaseous communication between said central chamber (120) and pyrolysis chamber (110), and
▪ at least one opening (132) for injecting oxygen into said central chamber (120) to oxidize therein at least part of the pyrolysis gas passing from the pyrolysis chamber (110) to the central chamber (120);
**characterized in that**:
- the at least one opening for injecting oxygen (132) is located in a so-called cracking chamber, at the bottom of said central chamber (120) ;and
- the gaseous communication openings (128) are located at the top and on the sides of said central chamber (120).

2. The device (100) according to the preceding claim, **characterized in that** it comprises, in the central chamber (120), a heat source supplying the heat required to start up said device (100).

3. The device (100) according to any one of the preceding claims, **characterized in that** the central chamber (120) and the pyrolysis chamber (110) are concentric.

4. The device (100) according to any one of the preceding claims, **characterized in that** it comprises at least one port (114) for inserting a gaseous flow of CO₂, in particular hot, into the pyrolysis chamber (110), and in particular above the central chamber (120).

5. The device (100) according to any one of the preceding claims, **characterized in that** it comprises at least one double wall (124) separating the central chamber (120) from the pyrolysis chamber (110), in particular on the sides of the central chamber (120), provided for a gaseous flow of CO₂ to circulate therein.

6. The device (100) according to any one of the preceding claims, **characterized in that**, on the side opposite the central chamber (120), the pyrolysis chamber (110) is delimited by a double wall (112) on at least one side portion of said pyrolysis chamber (110).

7. The device (100) according to claims 5 and 6, **characterized in that** the double wall (124) separating the pyrolysis chamber (110) and the central chamber (120), and the double wall (112) delimiting the pyrolysis chamber (110) communicate with each other, via one or more transverse double walls (126).

8. The device (100) according to any one of claims 5 to 7, **characterized in that** it comprises an opening (134) for inserting CO₂ into at least one double wall (112, 124, 126).

9. The device (100) according to any one of the preceding claims, **characterized in that** it is presented in the form of a single-piece unit.

10. An installation (400) for producing a synthesis gas comprising, and in particular consisting of, CO and H₂, from dry carbonaceous raw materials (DCRM), said installation (400) comprising:
- a conversion device (100) according to any one of the preceding claims,
- a means (402) for inserting DCRM into said conversion device (100), and
- a means (406) for extracting synthesis gas supplied by said conversion device (100).

11. The installation (400) according to the previous claim, **characterized in that** the extraction means (406) comprises at least one of the following means:
- at least one suction means (414) for the synthesis gas linked, or connected, to the extraction opening (108) of the conversion device (100) ;
- at least one heat exchanger (408, 412) for cooling the synthesis gas supplied by said conversion device (100);
- at least one device (410) for filtering the synthesis gas supplied by said conversion device (100).
